# EUROPÄISCHE PATENTSCHRIFT

(11) **EP 2 081 752 B1**
(45) Veröffentlichungstag und Bekanntmachung des Hinweises auf die Patenterteilung: **26.10.2011**
(21) Anmeldenummer: 07785654.0
(22) Anmeldetag: 19.07.2007
(51) Int. Cl.: B29C 49/64, B29C 49/68, B29C 49/06, B29C 49/12, B29C 49/36

(54) **VERFAHREN UND VORRICHTUNG ZUR BLASFORMUNG VON BEHÄLTERN**
METHOD AND DEVICE FOR BLOW MOULDING CONTAINERS
PROCÉDÉ ET DISPOSITIF DE FORMAGE-SOUFFLAGE DE RÉCIPIENTS

(30) Priorität: 18.10.2006 DE 102006049163
(43) Veröffentlichungstag der Anmeldung: 29.07.2009
(73) Patentinhaber: KHS Corpoplast GmbH, 22145 Hamburg (DE)
(72) Erfinder: HAESENDONCKX, Frank, 22395 Hamburg (DE); VOGEL, Klaus, 22885 Barsbüttel (DE); REIMER, Dirk, 22850 Norderstedt (DE)
(74) Vertreter: Klickow, Hans-Henning
(86) Internationale Anmeldenummer: PCT/DE2007/001285
(87) Internationale Veröffentlichungsnummer: WO 2008/046369

(56) Entgegenhaltungen:
- WO-A-02/087850
- AT-B- 412 543
- DE-A1- 10 116 665

## Beschreibung

Die Erfindung betrifft ein Verfahren zur Blasformung von Behältern, bei dem ein Vorformling aus einem thermoplastischen Material nach einer thermischen Konditionierung entlang eines Transportweges im Bereich einer Heizstrecke innerhalb einer Blasform durch Blasdruckeinwirkung in den Behälter umgeformt wird, sowie bei der die thermische Konditionierung von mehreren übereinander positionierten Heizstrahlern durchgeführt wird, die von einer Steuereinheit zur Vorgabe mindestens eines Heizprofils angesteuert werden.

Die Erfindung betrifft darüber hinaus eine Vorrichtung zur Blasformung von Behältern aus einem thermoplastischen Material, die mindestens eine entlang eines Transportweges eines Vorformlings angeordnete Heizstrecke und eine mit einer Blasform versehene Blasstation aufweist, sowie bei der die Heizstrecke mindestens ein Heizelement mit mindestens zwei übereinander angeordneten Heizstrahlern aufweist und bei der die Heizstrahler an eine Steuereinheit zur Vorgabe mindestens eines Heizprofils angeschlossen sind.

Bei einer Behälterformung durch Blasdriruckeinwirkung werden vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, daß die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Bei der Durchführung einer blastechnischen Behälterformung besteht eine wesentliche Aufgabe darin, in der Behälterwandung eine vorgegebene Materialverteilung zu erreichen. Ein wesentlicher Parameter zur Vorgabe der sich ergebenden Materialverteilung stellt die Verteilung der vor der Blasformung in den Vorformlingen realisierten Wärmeverteilung dar.

Die Wärmeverteilung wird typischerweise derart realisiert, daß in einer Umfangsrichtung der Vorformlinge ein gleiches Temperaturniveau und in einer Längsrichtung der Vorformlinge ein Temperaturprofil erzeugt wird. Darüber hinaus erfolgt auch durch die Wand des Vorformlings hindurch von außen nach innen die Vorgabe eines geeigneten Temperaturprofils. Grundsätzlich ist davon auszugehen, daß Bereiche des Vorformlings mit einer geringeren Temperatur zu dickeren Wandungsbereichen des geblasenen Behälters führen und daß die wärmeren Bereiche des Vorformlings bei der Durchführung der Blasverformung stärker verstreckt werden und hierdurch zu dünneren Wandungsbereichen des geblasenen Behälters führen.

Die Temperatur im Bereich der Vorformlinge sowie im Bereich der Heizstrecke kann mit sogenannten Pyrometern gemessen werden.

Eine konkrete Einstellung der für die Beheizung der Vorformlinge verwendeten Heizelemente sowie der einzelnen Heizstrahler erfolgt überwiegend manuell nach einer Auswertung der Wanddickenverteilung im Bereich der geblasenen Behälter. Aufgrund der Mehrzahl der in einer Transportrichtung der Vorformlinge hintereinander angeordneten Heizelemente sowie auftretender thermischer Ausgleichsvorgänge erfolgt die Einstellung adaptiv und manuell in einem umfangreichen Testbetrieb, in dem empirisch Einstellungen der Heizelemente verändert und die Auswirkungen auf die geblasenen Behälter erfaßt werden. Ein derartiges Vorgehen erweist sich in der Regel als sehr zeitaufwendig. Bei erheblichen Temperaturschwankungen der Umgebungstemperatur oder der Luftfeuchtigkeit sind darüber hinaus häufig Nacheinstellungen erforderlich.

Bekannt ist es ebenfalls bereits, die Heizstrahler bzw. die Heizelemente mit einer Steuerung zu koppeln, die automatisch vorgewählte Temperaturprofile vorgibt. Beispielsweise ist es möglich, im Bereich einer Bedieneinheit unterschiedliche Rezepturen zur Verformung von Vorformlingen in Behälter abzuspeichern und als Teil dieser Rezepturen die Einstellung der Heizstrahler zu definieren. Bei einer Auswahl einer bestimmten Rezeptur durch einen Bediener wird dann automatisch das dieser Rezeptur zugeordnete Heizprofil durch entsprechende Ansteuerung der Heizstrahler generiert.

Ein besonderes Problem tritt auf, wenn die Blasmaschine aus einem Produktionsbetrieb in einen sogenannten Standby-Betrieb überführt wird. Bei einem Übergang in einen derartigen Standby-Betrieb erfolgt ein geordnetes Leerfahren der Maschine. Alle noch in der Maschine befindlichen Vorformlinge werden fertig temperiert und zu Behältern umgeformt. Es werden mit Beginn der Einleitung des Standby-Betriebes aber keine neuen Vorformlinge mehr zugeführt.

Da während des Standby-Betriebes im Bereich der Heizung keine Vorformlinge mehr beheizt werden und somit kein Wärmeabtransport erfolgt, ist eine Reduktion der Heizleistung erforderlich. Die Heizleistung wird dabei typischerweise um einen bestimmten Prozentsatz reduziert. Vor einem Wiederanlaufen des Produktionsbetriebes muß die Heizung wieder hochgefahren werden und eine vorgesehene Temperaturverteilung in der Heizstrecke gewährleistet sein. Dieses Hochfahren der Heizstrecke erfordert gemäß dem Stand der Technik einen Zeitraum von zwei bis drei Minuten. Maßgeblich für diese Verzögerungszeit sind thermische Trägheiten der Strahleröhren, der Heizkastengehäuse, der Heizkastenreflektoren sowie den Heizkästen gegenüberliegend angeordneter Reflektoren.

Aus der WO 02/087850 A ist es bereits bekannt, im Bereich einer Heizstrecke zur Beheizung von Vorformlingen Heizkästen anzuordnen, die in lotrechter Richtung übereinander angeordnete Heizstrahler aufweisen. Zur Erzeugung eines Temperaturprofils im Bereich der Vorformlinge werden die Heizstrahler relativ zueinander mit unterschiedlichen Heizintensitäten betrieben.

Eine ähnliche Einrichtung zur Generierung eines Temperaturprofils, das sich in einer Längsrichtung der Vorformlinge erstreckt, wird auch in der AT 412543 B beschrieben.

Aufgabe der vorliegenden Erfindung ist es, ein Verfahren der einleitend genannten Art derart zu verbessern, daß eine verzögerungszeit zwischen einem Standby-Betrieb und einem Produktionsbetrieb vermindert wird.

Diese Aufgabe wird erfindungsgemäß dadurch gelöst, daß die Heizstrahler während einer Produktion entsprechend eines ersten Heizprofils und während eines Standby-Betriebes, während dessen keine Vorformlinge im Bereich der Heizstrecke beheizt oder der Heizstrecke zugeführt werden, entsprechend eines zum ersten Heizprofil unterschiedlichen zweiten Heizprofils angesteuert werden, wobei das zweite Heizprofil eine gegenüber dem ersten Heizprofil unterschiedliche Verteilung der Heizleistung im Bereich der Heizstrecke vorgibt.

Weitere Aufgabe der vorliegenden Erfindung ist es, eine Vorrichtung der einleitend genannten Art derart zu konstruieren, daß eine erhöhte Maschinenverfügbarkeit unterstützt wird.

Diese Aufgabe wird erfindungsgemäß dadurch gelöst, daß die Heizstrahler mit einer Steuerung gekoppelt sind, die mindestens zwei unterschiedliche Heizprofile generiert, wobei ein erstes Heizprofil einem Produktionsbetrieb und ein zweites Heizprofil einem Standby-Betrieb, während dessen keine Vorformlinge im Bereich der Heizstrecke beheizt oder der Heizstrecke zugeführt werden, zugeordnet ist, wobei das zweite Heizprofil eine gegenüber dem ersten Heizprofil unterschiedliche Verteilung der Heizleistung im Bereich der Heizstrecke vorgibt.

Durch das gegenüber dem ersten Heizprofil geänderte zweite Heizprofil ist es möglich, eine Optimierung der Temperaturverteilung im Bereich der Heizstrecke derart durchzuführen, daß mit einer geringen zeitverzögerung der Produktionsbetrieb aufgenommen werden kann. Im Gegensatz zum Stand der Technik, bei dem das Heizprofil beibehalten und lediglich die Amplitude der Heizleistung verteilt über das gesamte Profil gleichmäßig zurückgenommen wird, ermöglicht eine Variation des Heizprofils, gezielt eine Temperaturerhöhung in denjenigen Bereichen zu vermeiden, die ohne einen Vorformlingsdurchsatz zu einer Temperaturerhöhung neigen und ein zu starkes Abkühlen in unkritischen Bereichen zu verhindern.

Bei einer optimalen Wahl des zweiten Heizprofils wird die Temperaturverteilung im Bereich der Heizstrecke durch eine selektive und relativ zueinander unterschiedliche Verminderung der Heizleistung in einzelnen Profilbereichen erreicht. Gemäß einer optimalen Profilanpassung wird im Standby-Betrieb innerhalb der Heizstrecke eine im wesentlichen gleiche Temperaturverteilung in Relation zu einem Produktionsbetrieb erreicht und lediglich die durch den fehlenden Vorformlingsdurchsatz ebenfalls fehlende Wärmeabfuhr kompensiert.

Eine optimale Temperatursteuerung wird insbesondere dadurch erreicht, daß das zweite Heizprofil eine geringere mittlere Heizleistung als das erste Heizprofil generiert.

Eine Dimensionierungsvorschrift wird dadurch bereitgestellt, daß die mittlere Heizleistung des zweiten Heizprofils etwa um eine mittlere Wärmeaufnahme je zeiteinheit der Vorformlinge während der Durchführung deren Beheizung vermindert wird.

Insbesondere ist vorgesehen, daß das zweite Heizprofil im Bereich der Heizstrecke eine mittlere Temperatur generiert, die etwa der vom ersten Heizprofil generierten Temperatur während der Beheizung der Vorformlinge entspricht.

Eine weitere Ausführungsvariante besteht darin, daß während des Standby-Betriebes die Vorformlinge halternde Transportelemente stärker mit einem Kühlgas angeblasen werden als während der Durchführung einer Beheizung von Vorformlingen.

Zur Verminderung eines ungewollten Aufheizens der Tragelemente erweist es sich als vorteilhaft, daß benachbart zu den Tragelementen der Vorformlinge angeordnete Heizstrahler während des Standby-Betriebes mit einer größeren Leistungsreduktion als entfernt zu den Tragelemente angeordnete Heizstrahler betrieben werden.

Sowohl während der Durchführung eines Produktionsbetriebes als auch während der Durchführung eines Standby-Betriebes ist es möglich, daß eine Kühlung von Reflektoren durchgeführt wird.

Darüber hinaus ist vorgesehen, daß die Heizstrahler gekühlt werden.

Eine genaue Einhaltung von vorgegebenen Temperaturen wird dadurch unterstützt, daß eine Temperatur im Bereich der Heizstrecke gemessen wird.
Besonders vorteilhaft erweist es sich, daß die Temperatur im Bereich der Heizstrecke geregelt wird.

Zusätzliche Möglichkeiten zur Temperaturbeeinflussung werden dadurch bereitgestellt, daß die Temperatur im Bereich der Heizstrecke durch eine Kombination von Ansteuerungen der Heizelemente und von Kühlelementen durchgeführt wird.

Gemäß einer typischen Ausführungsform ist vorgesehen, daß die Blasmaschine gekoppelt mit einer Füllmaschine betrieben wird.

Darüber hinaus ist auch daran gedacht, daß die Blasmaschine in einem Inline-Betrieb die Behälter produziert.

Eine weitere Ausführungsvariante besteht darin, daß die Blasmaschine gemeinsam mit einer Füllmaschine als Blockmaschine betrieben wird.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: einen Querschnitt durch ein Heizelement mit einer Mehrzahl übereinander angeordneter Heizstrahler sowie einen zugeordneten Vorformling,
- Fig. 6: ein Blockschaltbild zur Veranschaulichung einer grundsätzlichen Struktur der Regelung,
- Fig. 7: ein Ablaufdiagramm der Verfahrensdurchführung und
- Fig. 8: ein gegenüber der Darstellung in Fig. 7 modifizierter Verfahrensablauf mit zusätzlicher Regelung der Ofentemperatur.

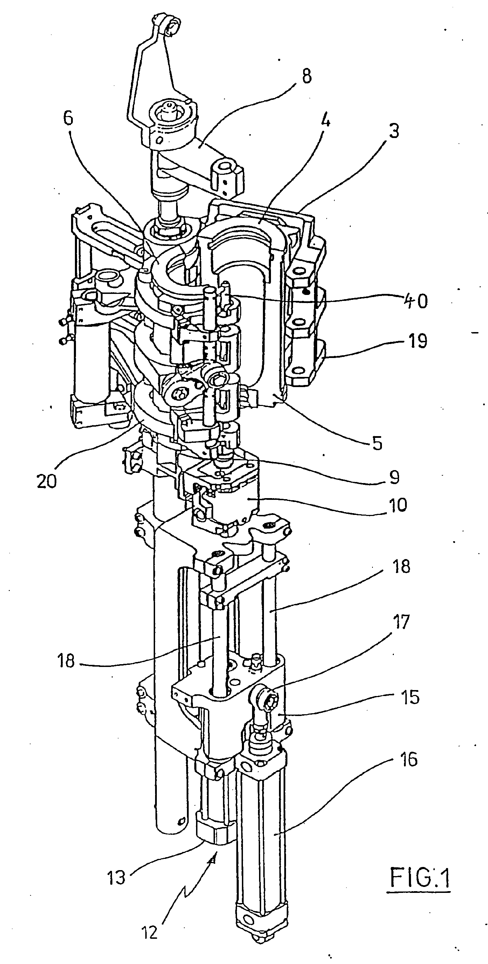

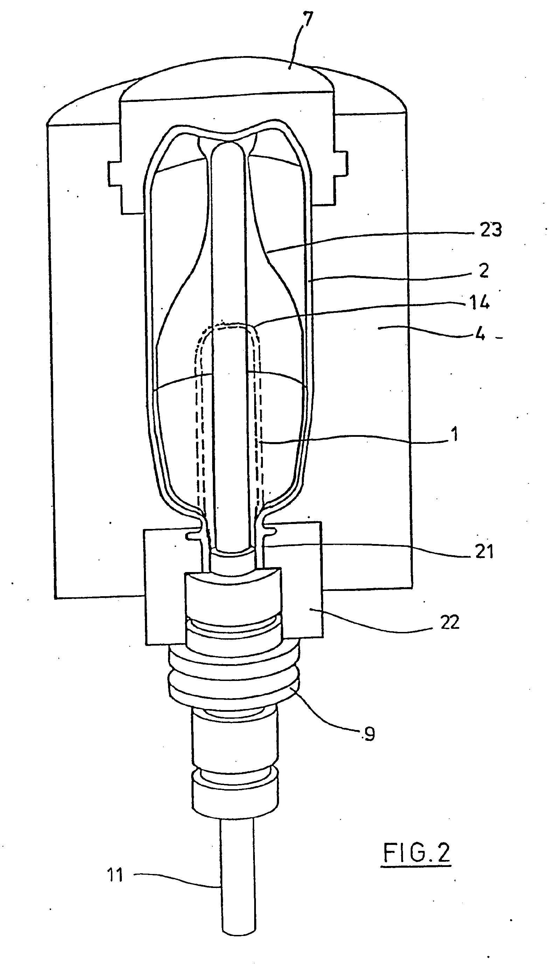

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

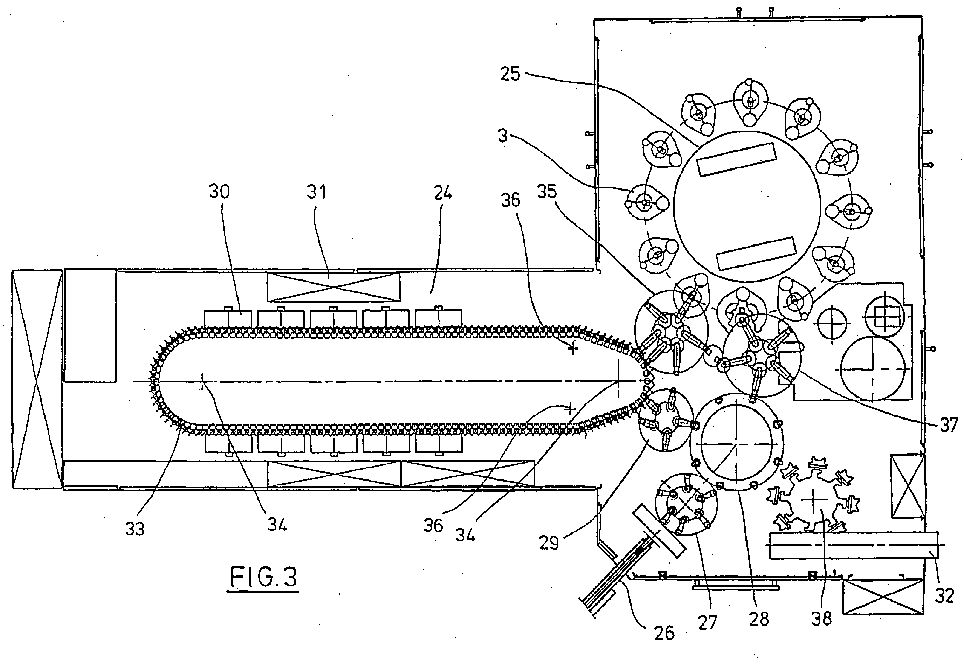

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizelement (30) sowie Gebläse (31) angeordnet, um die Vor-formlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

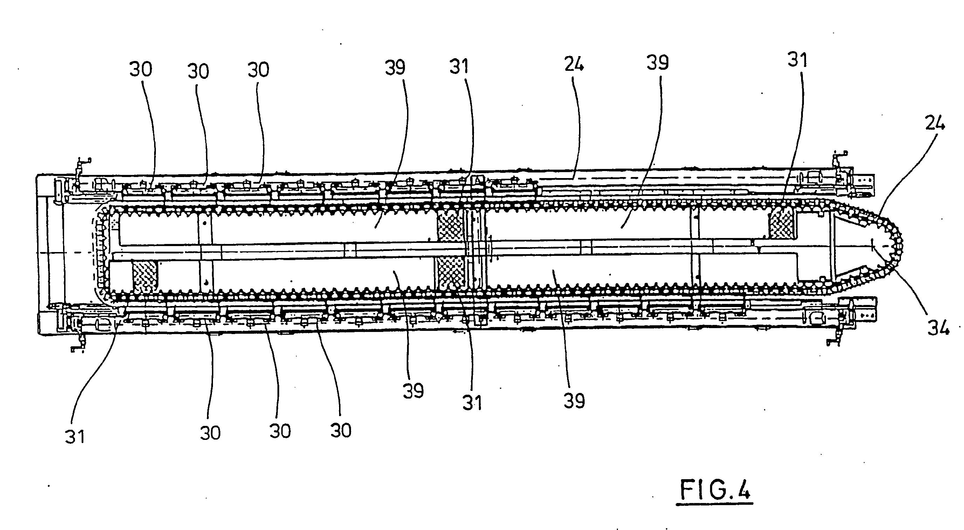

In der in Fig. 4 dargestellten modifizierten Heizstrekke (24) können durch die größere Anzahl von Heizelementen (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizelementen (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizelementen (30) gegenüberliegenden Oberflächen Reflektoren für die Heizstrahlung bereitstellen, ebenfalls ist es möglich, über die abgegebene Kühlluft auch eine Kühlung der Heizelemente (30) zu realisieren.

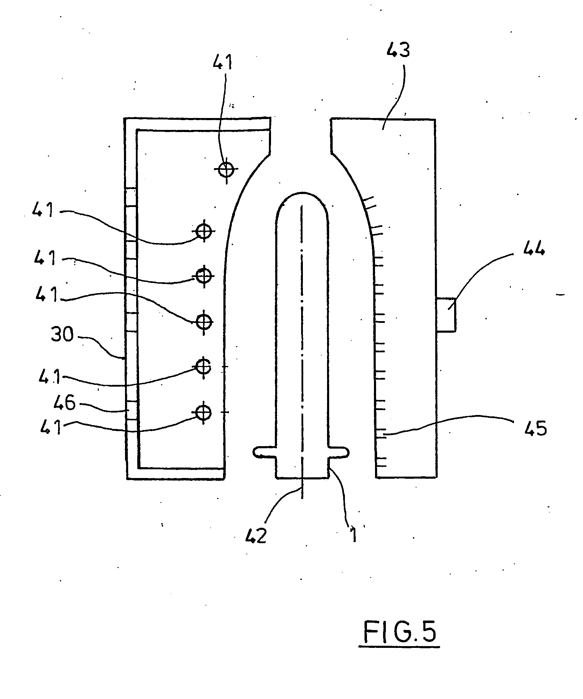

Fig. 5 zeigt eine schematische Darstellung eines Heizelementes (30), das mit einer Mehrzahl übereinander angeordneter Heizstrahler (41) versehen ist. Unter Verwendung der Heizstrahler (41) ist es möglich, in Richtung einer Längsachse (42) des Vorformlings (1) ein vorgegebenes Temperaturprofil zu erzeugen.

Gegenüberliegend zum Heizelement (30) ist ein Reflektor (43) angeordnet. Der Reflektor (43) weist einen Anschluß (44) zur Zuführung von Kühlluft auf. Ebenfalls ist es möglich, im Bereich des Reflektors (43) Ausströmöffnungen (45) anzuordnen, um Kühlgas in Richtung auf eine Oberfläche des Vorformlings (1) zu leiten. Im Bereich des Heizelementes (30) sind Ausströmöffnungen für ein Kühlgas angeordnet, um eine Kühlung der Heizstrahler (41) vorzunehmen. Die Ausströmöffnungen (46) sind mit einer nicht dargestellten Kühlluftzufuhr verbunden.

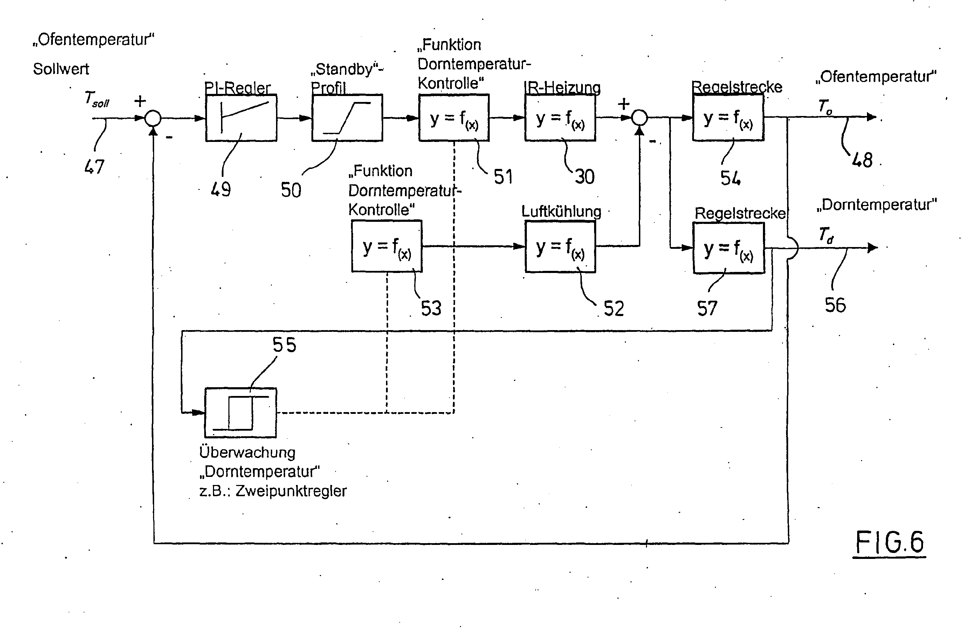

Fig. 6 zeigt eine schematische Darstellung eines Regelungssystems zur Vorgabe einer geeigneten Ofentemperatur in einem Standby-Betrieb. Ein Temperatursollwert (47) definiert einen optimalen Wert für die Temperatur im Standby-Betrieb. Vorteilhafterweise ist der Temperatursollwert (47) über ein Bediensystem der Blasmaschine einstellbar. Ausgangsgröße des Regelkreises ist die tatsächliche Ofentemperatur (48). Eine Regeldifferenz aus dem Temperatursollwert (47) und der Ofentemperatur (48) wird einem Regler (49) zugeführt, der beim dargestellten Ausführungsbeispiel als ein PI-Regler ausgebildet ist, der sowohl einen Proportionalanteil als auch einen Integralanteil aufweist. Der Ausgangswert des Reglers (49) wird über ein Standby-Profil (50) zur Ansteuerung der einzelnen Heizstrahler (41) verwendet. Die Heizstrahler (41) werden hierbei insbesondere derart angesteuert, daß auf den einzelnen Heizungsebenen ein jeweiliger Energieinhalt im Bereich der Heizstrecke (24) konstant bleibt.

Im Anschluß an die Profilgenerierung ist ein Kontrollelement (51) vorgesehen, um eine Temperaturüberwachung für die Halteelemente durchzuführen, von denen die Vorformlinge (1) durch den Ofen hindurch transportiert werden. Für den Fall eines unzulässigen Temperaturanstieges der Halteelemente erfolgt ein Eingriff des Kontrollelementes (51) in das jeweilige Stellsignal. Der Ausgangswert des Kontrollelementes (51) wird den jeweiligen Heizstrahlern (41) der Heizelemente (30) zugeführt. Zusätzlich zur Beheizung unter Verwendung der Heizelemente (30) kann eine aktive Kühlung im Bereich der Heizstrecke vorgesehen sein. Ein entsprechendes Kühlelement (52) wird hierzu von einem Steuerelement (53) koordiniert. Im Bereich des Steuerelementes (53) kann ebenfalls eine Temperaturkontrolle für die Transportelemente der Vorformlinge (1) realisiert sein. Die konkrete Temperatur der Transportelemente ergibt sich durch die Differenz der zugeführten Strahlungsenergie und die durch die Luftkühlung abgeführte Wärmemenge. Entsprechend ergibt sich auch die Ofentemperatur (48) aus der Differenz zwischen dem Ausgangswert der Heizelemente (30) und der Kühlelemente (52) und der Berücksichtigung der Dynamik der realisierten Regelstrecke (54).

Zur Regelung der Temperatur der Tragelemente für die Vorformlinge (1) wird ein Regler (55) verwendet, dem ein Temperaturistwert der Transportelemente zugeführt wird. Ein Ausgang des Reglers (55) wirkt sowohl auf das Kontrollelement (51) als auch auf das Steuerelement (53) ein. Eine konkrete Temperatur der Transportelemente (56) ergibt sich aus der Differenz der Ausgangswerte der Heizelemente (30) und des Kühlelementes (52) unter Berücksichtigung der Dynamik einer zugeordneten Regelstrecke (57).

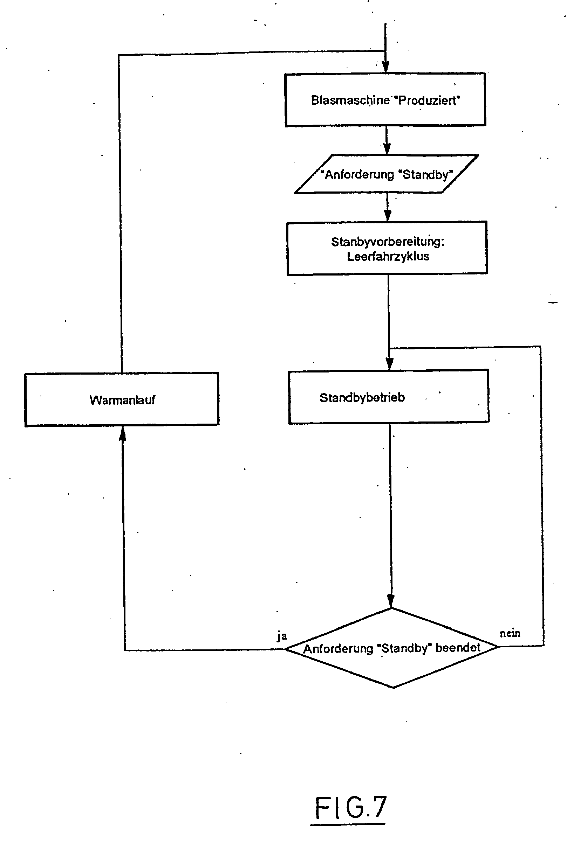

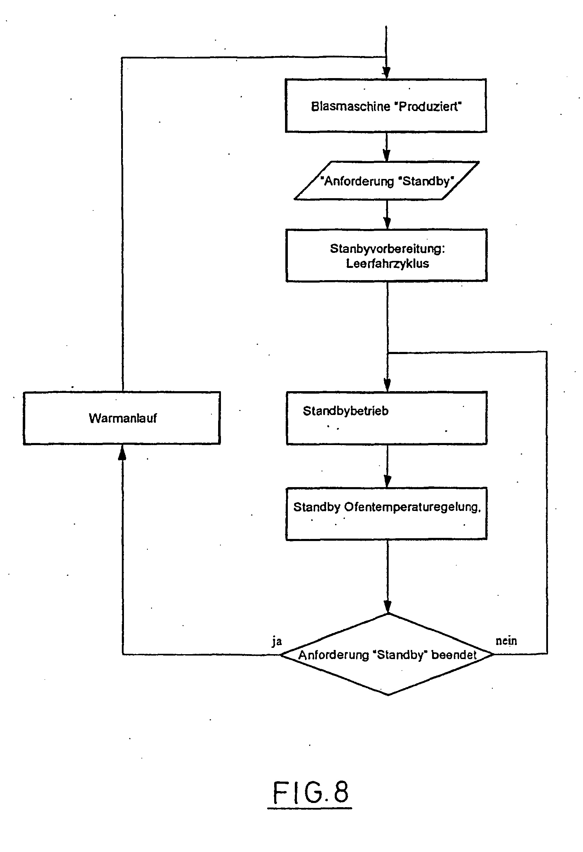

Fig. 7 veranschaulicht den Verfahrensablauf für die Durchführung der Temperaturvorgabe in einem Standby-Betrieb im Rahmen einer Temperatursteuerung. Fig. 8 zeigt einen modifizierten Verfahrensablauf unter Berücksichtigung einer Regelung der Ofentemperatur.

Gemäß einer Ausführungsform der Erfindung wird in Richtung auf den Mündungsabschnitt (21) des Vorformlings (1) ausgerichtete Kühlluft im Standby-Betrieb unterschiedlich zur Kühlluft varriert, die auf andere Wandungsbereiche des Vorformlings (1) geleitet wird. Zur Messung der Temperatur im Heizofen wird vorzugsweise ein Temperaturfühler verwendet, der derart angeordnet ist, daß dieser nicht im Strömungsfeld der in den Ofen eingeleiteten Kühlluft liegt, sondern die tatsächliche Ofentemperatur erfaßt.

## Patentansprüche

1. Verfahren zur Blasformung von Behältern (2), bei dem ein Vorformling (1) aus einem thermoplastischem Material nach einer thermischen Konditionierung entlang eines Transportweges im Bereich einer Heizstrecke (24) innerhalb einer Blasform (4) durch Blasdruckeinwirkung in den Behälter (2) umgeformt wird, sowie bei der die thermische Konditionierung von mehreren übereinander positionierten Heizstrahlern (41) durchgeführt wird, die von einer Steuereinheit zur Vorgabe mindestens eines Heizprofils angesteuert werden, d**adurch gekennzeichnet, daß** die Heizstrahler (41) während einer Produktion entsprechend eines ersten Heizprofils und während eines Standby-Betriebes während dessen keine Vorformlinge (1) im Bereich der Heizstrecke (24) beheizt oder der Heizstrecke (24) zugeführt werden, entsprechend eines zum ersten Heizprofil unterschiedlichen zweiten Heizprofils angesteuert werden, wobei das zweite Heizprofil eine gegenüber dem ersten Heizprofil unterschiedliche Verteilung der Heizleistung im Bereich der Heizstrecke (24) vorgibt.

2. Verfahren nach Anspruch 1, **dadurch gekennzeichnet, daß** das zweite Heizprofil eine geringere mittlere Heizleistung als das erste Heizprofil generiert.

3. Verfahren nach Anspruch 1 oder 2, **dadurch gekennzeichnet, daß** die mittlere Heizleistung des zweiten Heizprofils etwa um eine mittlere Wärmeaufnahme je Zeiteinheit der Vorformlinge (1) während der Durchführung deren Beheizung vermindert wird.

4. Verfahren nach einem der Ansprüche 1 bis 3, **dadurch gekennzeichnet, daß** das zweite Heizprofil im Bereich der Heizstrecke (24) eine mittlere Temperatur generiert, die etwa der vom ersten Heizprofil generierten Temperatur während der Beheizung der vorformlinge (1) entspricht.

5. Verfahren nach einem der Ansprüche 1 bis 4, **dadurch gekennzeichnet, daß** während des Standby-Betriebes die Vorformlinge (1) halternde Transportelemente stärker mit einem Kühlgas angeblasen werden als während der Durchführung einer Beheizung von Vorformlingen (1).

6. Verfahren nach einem der Ansprüche 1 bis 5, **dadurch gekennzeichnet, daß** benachbart zu den Tragelementen der Vorformlinge (1) angeordnete Heizstrahler (51) während des Standby-Betriebes mit einer größeren Leistungsreduktion als entfernt zu den Tragelemente angeordnete Heizstrahler (41) betrieben werden.

7. Verfahren nach einem der Ansprüche 1 bis 6, **dadurch gekennzeichnet, daß** eine Kühlung von Reflektoren (43) durchgeführt wird.

8. Verfahren nach einem der Ansprüche 1 bis 7, **dadurch gekennzeichnet, daß** die Heizstrahler (41) gekühlt werden.

9. Verfahren nach einem der Ansprüche 1 bis 7, **dadurch gekennzeichnet, daß** eine Temperatur im Bereich der Heizstrecke (41) gemessen wird.

10. Verfahren nach einem der Ansprüche 1 bis 9, **dadurch gekennzeichnet, daß** die Temperatur im Bereich der Heizstrecke (24) geregelt wird.

11. Verfahren nach einem der Ansprüche 1 bis 10, **dadurch gekennzeichnet, daß** die Temperatur im Bereich der Heizstrecke (24) durch eine Kombination von Ansteuerungen der Heizelemente (30) und von Kühlelementen (52) durchgeführt wird.

12. Verfahren nach einem der Ansprüche 1 bis 11, **dadurch gekennzeichnet, daß** die Blasmaschine gekoppelt mit einer Füllmaschine betrieben wird.

13. Verfahren nach einem der Ansprüche 1 bis 11, **dadurch gekennzeichnet, daß** die Blasmaschine in einem Inline-Betrieb die Behälter (2) produziert.

14. Verfahren nach einem der Ansprüche 1 bis 13, **dadurch gekennzeichnet, daß** die Blasmaschine gemeinsam mit einer Füllmaschine als Blockmaschine betrieben wird.

15. Vorrichtung zur Blasformung von Behältern (2) aus einem thermoplastischen Material, die mindestens eine entlang eines Transportweges eines vorformlings (1) angeordnete Heizstrecke (24) und eine mit einer Blasform (4) versehene Blasstation (3) aufweist, sowie bei der die Heizstrecke (24) mindestens ein Heizelement (30) mit mindestens zwei übereinander angeordneten Heizstrahlern (41) aufweist und bei der die Heizstrahler (41) an eine Steuereinheit zur vorgabe mindestens eines Heizprofils angeschlossen sind, **dadurch gekennzeichnet, daß** die Heizstrahler (41) mit einer Steuerung gekoppelt sind, die mindestens zwei unterschiedliche Heizprofile generiert, wobei ein erstes Heizprofil einem Produktionsbetrieb und ein zweites Heizprofil einem Standby-Betrieb während dessen keine Vorformlinge (1) im Bereich der Heizstrecke (24) beheizt oder der Heizstrecke (24) zugeführt werden , zugeordnet ist, wobei das zweite Heizprofil eine gegenüber dem ersten Heizprofil unterschiedliche Verteilung der Heizleistung im Bereich der Heizstrecke (24) vorgibt.

16. Vorrichtung nach Anspruch 15, **dadurch gekennzeichnet, daß** das zweite Heizprofil gegenüber dem ersten Heizprofil eine verminderte mittlere wärmeleistung aufweist.

17. Vorrichtung nach Anspruch 15 oder 16, **dadurch gekennzeichnet, daß** die Differenz der mittleren Wärmeleistung des ersten Heizprofils und der mittleren Wärmeleistung des zweiten Heizprofils als mittlere wärmeaufnahme der Vorformlinge (1) während der Durchführung eines Produktionsbetriebes gewählt ist.

18. Vorrichtung nach einem der Ansprüche 15 bis 17, **dadurch gekennzeichnet, daß** die mittlere Wärmeleistung des zweiten Heizprofils derart gewählt ist, daß die Heizstrecke (24) während des Standby-Betriebes im wesentlichen die gleiche mittlere Temperatur wie im Produktionsbetrieb aufweist.

19. Vorrichtung nach einem der Ansprüche 15 bis 18, **dadurch gekennzeichnet, daß** im Bereich der Heizstrecke (24) die Vorformlinge (1) tragende Transportelemente mit Kühlgas anblasende Kühlelemente angeordnet sind.

20. Vorrichtung nach einem der Ansprüche 15 bis 19, **dadurch gekennzeichnet, daß** mindestens ein benachbart zum Transportelement der Vorformlinge (1) angeordneter Heizstrahler (41) im Standby-Betrieb eine geringere Wärmeleistung als ein dem Transportelement abgewandeter Heizstrahler (41) aufweist.

21. Vorrichtung nach einem der Ansprüche 15 bis 20, **dadurch gekennzeichnet, daß** mindestens ein den Heizstrahlern (41) gegenüberliegend angeordneter Reflektor (43) eine Kühlung aufweist.

22. Vorrichtung nach einem der Ansprüche 15 bis 21, **dadurch gekennzeichnet, daß** mindestens ein Heizelement (30) mit einer Kühlung versehen ist.

23. Vorrichtung nach einem der Ansprüche 15 bis 22, **dadurch gekennzeichnet, daß** im Bereich der Heizstrecke (24) mindestens ein Temperatursensor angeordnet ist.

24. Vorrichtung nach einem der Ansprüche 15 bis 23, **dadurch gekennzeichnet, daß** die Steuerung als Teil eines Regelkreises ausgebildet ist.

25. Vorrichtung nach einem der Ansprüche 15 bis 24, **dadurch gekennzeichnet, daß** separate Regelungen für die Temperatur im Bereich der Heizstrecke (24) sowie die Temperatur der Transportelemente der Vorformlinge (1) verwendet sind.

26. Vorrichtung nach einem der Ansprüche 15 bis 25, **dadurch gekennzeichnet, daß** die Blasmaschine mit einer Füllmaschine gekoppelt ist.

27. Vorrichtung nach einem der Ansprüche 15 bis 25, **dadurch gekennzeichnet, daß** die Blasmaschine als Teil einer Inline-Anordnung ausgebildet ist.

28. Vorrichtung nach einem der Ansprüche 15 bis 25, **dadurch gekennzeichnet, daß** die Blasmaschine mit einer Füllmaschine zu einer Blockmaschine gekoppelt ist.

## Claims

1. Method of blow-moulding containers (2), in which, after a thermal conditioning operation along a transport path, a preform (1) made of a thermoplastic material is shaped into the container (2) within a blow mould (4) in the region of a heating section (24) by the action of blowing pressure, and in which the thermal conditioning operation is carried out by a number of radiant heaters (41) which are positioned one above another and are triggered by a control unit for setting at least one heating profile, **characterised in that** the radiant heaters (41) are triggered during a manufacturing operation in accordance with a first heating profile and, during a standby operation during which no preforms (1) are heated in the region of the heating section (24) or are fed to said heating section (24), are triggered in accordance with a second heating profile which is different from the first heating profile, said second heating profile setting a distribution of the heating output in the region of the heating section (24) that differs from that of the first heating profile.

2. Method according to claim 1, **characterised in that** the second heating profile generates a lower average heating output than the first heating profile.

3. Method according to claim 1 or 2, **characterised in that** the average heating output of the second heating profile is reduced approximately by an average heat absorption, per unit of time, of the preforms (1) while the heating thereof is being carried out.

4. Method according to one of claims 1 to 3, **characterised in that** the second heating profile generates, in the region of the heating section (24), an average temperature which approximately corresponds to the temperature generated by the first heating profile during the heating of the preforms (1).

5. Method according to one of claims 1 to 4, **characterised in that**, during the standby operation, a cooling gas is blown more intensively onto transporting elements holding the preforms (1) than while a heating of preforms (1) is being carried out.

6. Method according to one of claims 1 to 5, **characterised in that** radiant heaters (51) arranged adjacent to the carrying elements of the preforms (1) are operated, during the standby operation, with a greater reduction in output than radiant heaters (41) arranged remotely in relation to said carrying elements.

7. Method according to one of claims 1 to 6, **characterised in that** a cooling of reflectors (43) is carried out.

8. Method according to one of claims 1 to 7, **characterised in that** the radiant heaters (41) are cooled.

9. Method according to one of claims 1 to 7, **characterised in that** a temperature in the region of the heating section (24) is measured.

10. Method according to one of claims 1 to 9, **characterised in that** the temperature in the region of the heating section (24) is regulated.

11. Method according to one of claims 1 to 10, **characterised in that** the temperature in the region of the heating section (24) is brought about by a combination of triggerings of the heating elements (30) and of cooling elements (52).

12. Method according to one of claims 1 to 11, **characterised in that** the blowing machine is operated in a manner coupled with a filling machine.

13. Method according to one of claims 1 to 11, **characterised in that** the blowing machine manufactures the containers (2) in an in-line operation.

14. Method according to one of claims 1 to 13, **characterised in that** the blowing machine is operated jointly with a filling machine as a block machine.

15. Device for blow-moulding containers (2) made of a thermoplastic material, which has at least one heating section (24) arranged along a transport path of a preform (1), and a blowing station (3) provided with a blow mould (4), and in which the heating section (24) has at least one heating element (30) with at least two radiant heaters (41) arranged one above another, and in which said radiant heaters (41) are connected to a control unit for setting at least one heating profile, **characterised in that** the radiant heaters (41) are coupled to a control system which generates at least two different heating profiles, a first heating profile being associated with a manufacturing operation and a second heating profile being associated with a standby operation during which no preforms (1) are heated in the region of the heating section (24) or are fed to said heating section (24), said second heating profile setting a distribution of the heating output in the region of the heating section (24) that differs from that of the first heating profile.

16. Device according to claim 15, **characterised in that** the second heating profile has a reduced average heat output, compared to the first heating profile.

17. Device according to claim 15 or 16, **characterised in that** the difference between the average heat output of the first heating profile and the average heat output of the second heating profile is chosen as the average heat absorption of the preforms (1) while a manufacturing operation is being carried out.

18. Device according to one of claims 15 to 17, **characterised in that** the average heat output of the second heating profile is chosen in such a way that the heating section (24) has substantially the same average temperature during the standby operation as in the manufacturing operation.

19. Device according to one of claims 15 to 18, **characterised in that**, in the region of the heating section (24), transporting elements carrying the preforms (1) are arranged with cooling elements that blow on cooling gas.

20. Device according to one of claims 15 to 19, **characterised in that**, in the standby operation, at least one radiant heater (41) arranged adjacent to the transporting element of the preforms (1) has a lower heat output than a radiant heater (41) that faces away from said transporting element.

21. Device according to one of claims 15 to 20, **characterised in that** at least one reflector (43) arranged opposite the radiant heaters (41) has a cooling system.

22. Device according to one of claims 15 to 21, **characterised in that** at least one heating element (30) is provided with a cooling system.

23. Device according to one of claims 15 to 22, **characterised in that** at least one temperature sensor is arranged in the region of the heating section (24).

24. Device according to one of claims 15 to 23, **characterised in that** the control system is constructed as part of a regulating circuit.

25. Device according to one of claims 15 to 24, **characterised in that** separate regulating systems are used for the temperature in the region of the heating section (24) and the temperature of the transporting elements of the preforms (1).

26. Device according to one of claims 15 to 25, **characterised in that** the blowing machine is coupled to a filling machine.

27. Device according to one of claims 15 to 25, **characterised in that** the blowing machine is constructed as part of an in-line arrangement.

28. Device according to one of claims 15 to 25, **characterised in that** the blowing machine is coupled to a filling machine to form a block machine.

## Revendications

1. Procédé pour le formage par soufflage de récipients (2), dans lequel une préforme (1) en matière thermoplastique est transformée, dans un moule (4), en un récipient (2), sous l'effet de la pression de soufflage, après un conditionnement thermique le long d'une voie de transport, dans la région d'un parcours de chauffage (24), ainsi que dans lequel est effectué le conditionnement thermique de plusieurs appareils de chauffage par rayonnement (41), qui, positionnés les uns au-dessus des autres, sont commandés par une unité de commande pour la prédétermination d'au moins un profil de chauffage, **caractérisé en ce que** les appareils de chauffage par rayonnement (41) sont commandés, pendant un fonctionnement en mode de production, selon un premier profil de chauffage, et, pendant un fonctionnement en en mode veille, au cours duquel aucune préforme (1) n'est chauffée dans la région du parcours de chauffage (24) ou conduite au parcours de chauffage (24), selon un deuxième profil de chauffage, qui diffère du premier profil de chauffage, sachant que le deuxième profil de chauffage détermine, dans la région du parcours de chauffage (24), une répartition de la puissance calorifique, qui diffère de celle du premier profil de chauffage.

2. Procédé selon la revendication 1, **caractérisé en ce que** le deuxième profil de chauffage génère une puissance calorifique moyenne plus faible que le premier profil de chauffage.

3. Procédé selon revendication 1 ou 2, **caractérisé en ce que** la puissance calorifique moyenne du deuxième profil de chauffage est réduite d'environ une absorption de chaleur moyenne par chaque unité de temps des préformes (1), pendant l'exécution de leur chauffage.

4. Procédé selon l'une des revendications 1 à 3, **caractérisé en ce que** le deuxième profil de chauffage génère, dans la région du parcours de chauffage (24), une température moyenne, qui correspond approximativement à la température générée par le premier profil de chauffage pendant le chauffage des préformes (1).

5. Procédé selon l'une des revendications 1 à 4, **caractérisé en ce que** les éléments de transport, qui maintiennent les préformes (1), sont plus fortement soumis au soufflage d'un gaz de refroidissement pendant le fonctionnement en en mode veille que pendant l'exécution du chauffage des préformes (1).

6. Procédé selon l'une des revendications 1 à 5, **caractérisé en ce que**, pendant le fonctionnement en mode veille, les appareils de chauffage par rayonnement (51), disposés dans le voisinage des éléments de support des préformes (1), sont exploités avec une plus grande réduction de puissance que les appareils de chauffage par rayonnement (41) éloignés desdits éléments de support.

7. Procédé selon l'une des revendications 1 à 6, **caractérisé en ce qu'**un refroidissement de réflecteurs (43) est exécuté.

8. Procédé selon l'une des revendications 1 à 7, **caractérisé en ce que** les appareils de chauffage par rayonnement (41) sont refroidis.

9. Procédé selon l'une des revendications 1 à 7, **caractérisé en ce qu'**une température est mesurée dans la région du parcours de chauffage (24).

10. Procédé selon l'une des revendications 1 à 9, **caractérisé en ce que** la température est réglée dans la région du parcours de chauffage (24).

11. Procédé selon l'une des revendications 1 à 10, **caractérisé en ce que** le réglage de la température dans la région du parcours de chauffage (24) est effectué par une combinaison de commandes des éléments de chauffage (30) et d'éléments de refroidissement (52).

12. Procédé selon l'une des revendications 1 à 11, **caractérisé en ce que** la machine de soufflage est exploitée en couplage avec une machine de remplissage.

13. Procédé selon l'une des revendications 1 à 11, **caractérisé en ce que** la machine de soufflage produit les récipients (2) en service en ligne.

14. Procédé selon l'une des revendications 1 à 13, **caractérisé en ce que** la machine de soufflage est exploitée en commun avec une machine de remplissage sous la forme d'un bloc.

15. Dispositif pour le formage par soufflage de récipients (2) en matière thermoplastique, qui est au moins doté d'un parcours de chauffage (24), disposé le long d'une voie de transport de préformes (1), et d'un poste de soufflage (3), qui est équipé d'un moule, ainsi que dans lequel le parcours de chauffage (24) est doté d'au moins un élément de chauffage (30), avec au moins deux appareil de chauffage par rayonnement (41), disposés l'un au-dessus de l'autre, et dans lequel les appareils de chauffage par rayonnement (41) sont raccordés à une unité de commande pour la prédétermination d'au moins un profil de chauffage, **caractérisé en ce que** les appareils de chauffage par rayonnement (41) sont couplés avec une commande, qui génère au moins deux profils de chauffage différents, sachant que le premier profil de chauffage est associé à un fonctionnement en mode de production, tandis que le deuxième profil de chauffage est associé à un fonctionnement en mode veille, au cours duquel aucune préforme (1) n'est chauffée dans la région du parcours de chauffage (24) ou conduite audit parcours de chauffage (24), le deuxième profil de chauffage déterminant, par rapport au premier profil de chauffage, une répartition différente de la chaleur calorifique, dans la région du parcours de chauffage (24).

16. Dispositif selon la revendication 15, **caractérisé en ce que** le deuxième profil de chauffage présente une puissance calorifique moyenne, réduite par rapport au premier profil de chauffage.

17. Dispositif selon revendication 15 ou 16, **caractérisé en ce que** la différence entre la puissance calorifique moyenne du premier profil de chauffage et la puissance calorifique moyenne du deuxième profil de chauffage est choisie en tant qu'absorption de chaleur moyenne des préformes (1) pendant un fonctionnement en mode de production.

18. Dispositif selon l'une des revendications 15 à 17, **caractérisé en ce que** la puissance calorifique moyenne du deuxième profil de chauffage est choisie de sorte que le parcours de chauffage (24) présente, pendant le fonctionnement en mode veille, sensiblement la même température moyenne que pendant le fonctionnement en mode de production.

19. Dispositif selon l'une des revendications 15 à 18, **caractérisé en ce que**, dans la région du parcours de chauffage (24), des éléments de transport, qui portent les préformes (1), sont agencés avec des éléments de refroidissement, qui soufflent du gaz de refroidissement.

20. Dispositif selon l'une des revendications 15 à 19, **caractérisé en ce qu'**au moins un radiateur (41), disposé dans le voisinage d'éléments de support des préformes (1), délivre, en fonctionnement en mode veille, une puissance calorifique plus faible qu'un radiateur (41) orienté à l'opposé de l'élément de transport.

21. Dispositif selon l'une des revendications 15 à 20, **caractérisé en ce qu'**au moins un réflecteur (43), disposé à l'opposé des appareils de chauffage par rayonnement (41), est pourvu d'un système de refroidissement.

22. Dispositif selon l'une des revendications 15 à 21, **caractérisé en ce qu'**au moins un élément de chauffage (30) est pourvu d'un système de refroidissement.

23. Dispositif selon l'une des revendications 15 à 22, **caractérisé en ce que**, dans la région du parcours de chauffage (24) est disposé au moins un capteur de température.

24. Dispositif selon l'une des revendications 15 à 23, **caractérisé en ce que** la commande est conçue en tant qu'élément d'un circuit de régulation.

25. Dispositif selon l'une des revendications 17 à 24, **caractérisé en ce que** des régulations séparées sont utilisées pour la température de la région du parcours de chauffage (24) ainsi que pour la température des éléments de transport des préformes (1).

26. Dispositif selon l'une des revendications 15 à 25, **caractérisé en ce que** la machine de soufflage est couplée avec une machine de remplissage.

27. Dispositif selon l'une des revendications 15 à 25, **caractérisé en ce que** la machine de soufflage est conçue en tant que partie composante d'un agencement en ligne.

28. Dispositif selon l'une des revendications 15 à 25, **caractérisé en ce que** la machine de soufflage est couplée avec une machine de remplissage sous la forme d'un bloc.
